# EUROPÄISCHE PATENTSCHRIFT

(11) **EP 3 227 581 B1**
(45) Veröffentlichungstag und Bekanntmachung des Hinweises auf die Patenterteilung: **26.06.2019**
(21) Anmeldenummer: 15766865.8
(22) Anmeldetag: 23.09.2015
(51) Int. Cl.: F16G 3/00, F16G 11/02, F16G 11/04

(54) **ENDLOS SCHLIESSBARER GURT**
ENDLESSLY CLOSEABLE BELT
COURROIE SANS FIN FERMABLE EN BOUCLE

(30) Priorität: 01.12.2014 DE 102014224526
(43) Veröffentlichungstag der Anmeldung: 11.10.2017
(73) Patentinhaber: ContiTech Transportbandsysteme GmbH, 30165 Hannover (DE)
(72) Erfinder: HÜLS, Achim, 30890 Barsinghausen (DE); MÖSCHEN-SIEKMANN, Michael, 37176 Nörten-Hardenberg (DE); RIEPL, Stanislaus, 30823 Garbsen (DE)
(74) Vertreter: Preusser, Andrea
(86) Internationale Anmeldenummer: PCT/EP2015/071838
(87) Internationale Veröffentlichungsnummer: WO 2016/087072

(56) Entgegenhaltungen:
- DE-A1- 2 357 994
- DE-B- 1 101 062
- US-A- 224 951
- US-A- 3 105 390

## Beschreibung

Die Erfindung betrifft einen endlos schließbaren Gurt gemäß des Oberbegriffs des Anspruchs 1, einen endlos geschlossenen Gurt gemäß des Oberbegriffs des Anspruch 9, sowie ein Verbindungselement gemäß des Anspruchs 10.

Endlos geschlossene Gurte stellen geschlossen ringförmige Elemente dar, welche z.B. als Antriebsgurte wie z.B. Keilriemen zur Kraftübertragung verwendet werden. Sie können jedoch auch als Fördergurte dazu verwendet werden, z.B. lose Schüttgüter zu transportieren. Auch können sie verwendet werden, um als Raupenbänder bei Raupenfahrzeugen der Fortbewegung des Fahrzeugs zu dienen.

Derartige Gurte laufen i.Allg. um einen Antrieb und weitere Führungs- bzw. Stützrollen herum, um die Antriebsleistung auf ein Abtriebselement zu übertragen (Keilriemen), zum Materialtransport zu nutzen (Fördergurt) oder ein Fahrzeug fortzubewegen (Raupenband). Hierzu weisen diese Gurte zum einen eine vorbestimmte Elastizität auf, welche z.B. die die Verwendung eines Elastomermaterials wie z.B. Gummi als Basismaterial des Gurtes erreicht werden kann. Zum anderen weisen diese Gurte üblicherweise in Längsrichtung einen oder mehrere Festigkeitsträger zur Übertragung der Zugkräfte in Laufrichtung des Gurtes auf. Dies können z.B. Stahlseile sein, welche eine besonders hohe Kraftübertragung erlaufen, aber auch Textilgewebe sind als Festigkeitsträger üblich.

Derartige Gurte können z.B. als Keilriemen teilweise bereits geschlossen hergestellt werden. In den meisten Fällen z.B. als Fördergurte oder Raupenbänder werden die Gurte aufgrund ihrer Länge in Längsrichtung üblicherweise offen, d.h. als länglicher Körper, herstellt und auch so zum Ort der Anwendung transportiert. Dort werden sie dann endlos geschlossen. Dies kann z.B. durch Zusammenvulkanisieren der beiden Enden erfolgen, was jedoch ein zerstörungsfreies wieder Trennen der Enden und damit Öffnen des Gurtes z.B. bei Verschleiß oder Beschädigung ausschließt. Ferner ist hierzu ein großer Aufwand vor Ort der Anwendung erforderlich.

Daher ist es bekannt, die Enden der Festigkeitsträger an den beiden Enden des offenen Gurtes vom Elastomermaterial freizulassen bzw. freizulegen und diese mechanisch zu verbinden. Dies kann z.B. dadurch erfolgen, dass die jeweiligen Enden in einem jeweils gemeinsamen Kopplungselement eingeklemmt und die beiden Kopplungselemente z.B. scharnierartig mittels eines Kopplungsstabes miteinander verbunden werden. Durch die Aufteilung dieser mechanischen Klemmverbindung auf zwei Kopplungselemente, die dann gegeneinander verdrehbar sind, soll die Biegsamkeit des Gurtes als Ganzes möglichst wenig eingeschränkt werden. Dies kann insbesondere bei kleinen Umlenkradien erforderlich sein.

Die WO 2013 174 666 A1 zeigt einen Gurt als elastomerem Werkstoff mit einer Festigkeitsträgerlage aus in Längsrichtung des Gurtes verlaufenden, parallel zueinander angeordneten Stahlseilen. Die Stahlseilenden sind jeweils in einem Gurtendekörper eingeklemmt. Die beiden Gurtendekörper sind scharnierartig miteinander gekoppelt.

Nachteilig ist hierbei, dass die Scharnierelemente eine Schwachstelle darstellen, die bei hohen Zugkräften eher versagen können als die Klemmung der Enden der Festigkeitsträger. Auch entsteht hier Verschleiß an den aneinander reibenden Flächen der Scharniere bzw. des Kopplungsstabes. Ferner erhöhen die Scharnierelemente den Fertigungsaufwand dieser Gurtverbindung. Desweiteren weist diese Art der Kopplung eine vergleichsweise große Baulänge in Längsrichtung auf. Auch ist diese Verbindung der beiden Kopplungselemente nur mit Aufwand durch die Entfernung des Scharnierbolzens wieder trennbar, die Scharnierelemente können jedoch gar nicht zerstörungsfrei wieder entfernt werden.

Die US 3,105,390 beschreibt in Kombination mit einem Zahnriemen eine Riemenverstärkung, die eine Vielzahl von in Längsrichtung des Riemens verlaufenden und darin eingebetteten Drahtseilen umfasst. Die Kabel weisen aneinanderstoßende Enden auf. Es sind Metallkugeln an den Kabelenden befestigt. Alle Kugeln sind in Reihenpaaren angeordnet, die in Längsrichtung gleichmäßig über die Länge des Riemens verteilt sind. Die Kugeln jeder Reihe liegen dicht beieinander. Die Kugeln einer Reihe eines Paares sind den Kugeln der anderen Reihe desselben Paares zugewandt. Die Kugeln sind zusammen mit den Kabeln in den Gurt eingebettet, wobei die Kabel freie Enden haben, die aus den erstgenannten Kugeln herausragen. Ein Schloss wird von dem Gurt getragen und umschließt die erstgenannten Kugeln.

Die US 224 951 A beschreibt einen Gürtelverschluss, bei dem die gebogene Platte an ihren gegenüberliegenden Enden mit innen angeschrägten Schlaufen und Nuten in Kombination mit Zahnstangen versehen ist. Die DE 2 357 994 offenbart ein Endlos schließbarer Gurt nach dem Oberbegriff des Anspruchs 1.

Eine Aufgabe der vorliegenden Erfindung ist es, einen endlos schließbaren Gurt bzw. einen endlos geschlossenen Gurt der eingangs beschriebenen Art bereit zu stellen, der die zuvor beschrieben Nachteile vermeidet. Insbesondere soll ein derartiger Gurt bereitgestellt werden, der bei hoher Kraftübertragung einfach hergestellt und geschlossen sowie geöffnet werden kann. Zusätzlich oder alternativ soll die Baulänge der mechanischen Verbindung verringert werden. Zumindest soll eine Alternative zu bekannten mechanischen Verbindungen derartiger Gurte bereitgestellt werden.

Die Aufgabe wird erfindungsgemäß durch einen endlosschließbaren Gurt mit den Merkmalen gemäß Anspruch 1, einen endlos geschlossenen Gurt mit den Merkmalen gemäß Anspruch 9, sowie ein Verbindungselement mit den Merkmalen gemäß Anspruch 11 gelöst. Vorteilhafte Weiterbildungen sind in den Unteransprüchen beschrieben.

Somit betrifft die vorliegende Erfindung einen endlos schließbaren Gurt mit wenigstens einem in Längsrichtung des Gurtes verlaufendem Festigkeitsträger, welcher vorzugsweise ein Stahlseil ist. Der Festigkeitsträger ist von einem elastischen Material umgeben, d.h. in dieses eingebettet, welches vorzugsweise ein elastomeres Material wie z.B. Gummi sein kann. Vorzugsweise weist der Gurt eine Mehrzahl, insbesondere eine Vielzahl von in Längsrichtung des Gurtes verlaufenden Festigkeitsträgern auf, welche vorzugsweise in Längsrichtung parallel zueinander verlaufen. Diese Festigkeitsträger dienen der Aufnahme und Übertragung von Zugkräften in Längsrichtung des Gurtes. Die Längsrichtung entspricht der Lauf-, Umlauf- bzw. Antriebsrichtung des Gurtes.

Erfindungsgemäß weist der endlos schließbare Gurt ein einstückiges Verbindungselement auf, welches die beiden Enden des Festigkeitsträgers miteinander verbinden kann, so dass hierdurch der Gurt endlos geschlossen werden kann. Durch die einstückige Ausbildung des Verbindungselements kann auf z.B. eine scharnierartige Kopplung einzelner Bestandteile eines derartigen Verbindungselements verzichtet werden, wodurch die Baulänge des Verbindungselements in Längsrichtung verkürzt werden kann. Ferner können die Scharnierelemente als Schwachstelle der Kopplung vermieden werden. Auch können auf diese Art und Weise aneinander reibende Elemente, die entsprechend verschleißen können, vermieden werden. Insgesamt kann auch diese Art und Weise die mechanische Kopplung einfacher und günstiger realisiert werden.

Erfindungsgemäß weisen die Enden der Festigkeitsträger jeweils dort kraftschlüssig befestigte Halteelemente auf. Dies können z.B. Hülsen aus Metall sein, die auf die Festigkeitsträgerenden aufgepresst sein können. Diese Halteelemente können durch das Verbindungselement in Längsrichtung formschlüssig gehalten werden. Hierdurch kann die mechanische Kopplung der beiden Festigkeitsträgerenden und damit auch der beiden Gurtenden hergestellt werden.

Dies ist vorteilhaft, weil durch die kraftschlüssig befestigten Halteelemente jeweils eine starke und auch bei großen Zugkräften haltbare Verbindung vor der Montage des Gurtes hergestellt werden kann, die jedoch nur eine kurze Baulänge in Längsrichtung erfordern kann. Die derart vorbereiteten Festigkeitsträgerenden können dann bei der Montage in das Verbindungselement eingebracht werden, so dass sie dort formschlüssig gehalten werden können. Dies ermöglicht insgesamt einen sicheren Halt der Festigkeitsträger durch das Verbindungselement bei gleichzeitig kürzerer Baulänge in Längsrichtung als bei den bekannten scharnierartigen Klemmverbindungen, bei denen zur direkten kraftschlüssigen Verbindung zwischen Verbindungselement und Festigkeitsträgerenden ein längerer Kontaktbereich in Längsrichtung erforderlich ist als erfindungsgemäß. Vorteilhaft ist ferner, dass eine formschlüssige Verbindung wieder zerstörungsfrei aufgehoben werden kann.

Gemäß einem Aspekt der vorliegenden Erfindung können die beiden Festigkeitsträgerenden sich in Längsrichtung direkt gegenüberliegend angeordnet werden. Vorteilhaft ist hierbei, dass die Verbindung der Festigkeitsträgerenden auf diese Art und Weise in der neutralen Phase des Festigkeitsträgers erfolgen kann, wodurch die Zugkräfte vollständig direkt in Längsrichtung übertragen werden können.

Gemäß der vorliegenden Erfindung weist das Verbindungselement wenigstens einen Aufnahmeraum auf, in welchem die die Halteelemente aufweisenden Festigkeitsträgerenden gemeinsam oder einzeln in Längsrichtung formschlüssig gehalten werden. Dieser Aufnahmeraum ist vorzugsweise senkrecht zur Längsrichtung zugänglich, so dass die Festigkeitsträgerenden im unbelasteten Zustand in dieser Seite, z.B. von oben, in den Aufnahmeraum eingebracht und durch Zugbelastung des Festigkeitsträgers formschlüssig vom Verbindungselement gehalten werden können. Vorteilhaft ist hierbei, dass diese Verbindung sehr einfach und dennoch sicher sowie auch wieder zerstörungsfrei aufhebbar hergestellt werden kann. Dies ist insbesondere bei z.B. der Montage eines Fördergurtes in einer Minenanlage vorteilhaft, weil Werkzeuge und Gerätschaften bei Minenanlagen i. Allg. nur aufwendig bereitgestellt werden können.

Der Aufnahmeraum kann dabei ausgebildet sein, die beiden Festigkeitsträgerenden eines Festigkeitsträgers gemeinsam aufzunehmen, d.h. ohne Trennung in Längsrichtung, oder es kann eine Trennung in jeweils einen einzelnen Aufnahmeraum für genau ein Festigkeitsträgerende erfolgen. Im ersten Fall können die beiden Festigkeitsträgerenden näher aneinander angeordnet werden, wodurch die Baulänge des Verbindungselements in Längsrichtung verkürzt werden kann. Im zweiten Fall kann die Stabilität des Verbindungselements durch zusätzliches kraftübertragendes Material erhöht werden.

Es ist weiter möglich, mehrere derartige Festigkeitsträger in dem Verbindungselement parallel nebeneinander anzuordnen. In diesem Fall kann der Aufnahmeraum in Querrichtung durchgängig ausgebildet sein, was eine kompaktere Anordnung der Festigkeitsträgerenden bzw. deren Halteelemente ermöglicht. Es können aber auch in Querrichtung zueinander beabstandete einzelne Aufnahmeräume für die Festigkeitsträgerenden jeweils eines Festigkeitsträgers vorgesehen sein. In diesem Fall können die Zugkräfte auch durch das Material in Längsrichtung zwischen den Aufnahmeräumen übertragen werden, wodurch die Stabilität des Verbindungselements erhöht werden kann.

Gemäß einem weiteren Aspekt der vorliegenden Erfindung weist das Verbindungselement durch Vorsprünge in Querrichtung begrenzte Öffnungen auf, so dass der Festigkeitsträger in Längsrichtung durch die Öffnungen hindurch angeordnet werden kann und so dass die Halteelemente der Festigkeitsträgerenden von den Vorsprüngen in Längsrichtung formschlüssig gehalten werden können. Diese Vorsprünge sind durch die dazwischenliegenden Öffnungen zinnenartig ausgebildet, d.h. sie umgreifen die Öffnungen in der Höhe des Verbindungselements beidseitig in Querrichtung und schließen so den Aufnahmeraum beidseitig in Längsrichtung ein. Die mit den Halteelementen versehenen Festigkeitsträgerenden können dann von Oben in den Aufnahmeraum so eingebracht werden, dass der Festigkeitsträger durch die Öffnungen hindurchgeführt wird und das jeweilige Halteelement von innen, d.h. vom Aufnahmeraum her, gegen die jeweiligen Vorsprünge anliegen kann, wodurch das jeweilige Festigkeitsträgerende formschlüssig vom Verbindungselement gehalten werden kann.

Gemäß einem weiteren Aspekt der vorliegenden Erfindung sind die sich in Längsrichtung gegenüberliegenden Vorsprünge miteinander verbunden ausgebildet. Dies kann z.B. dadurch erfolgen, dass das Material der Vorsprünge in Längsrichtung durchgängig ausgebildet ist. Hierdurch können die Zugkräfte auch durch dieses Material in Längsrichtung zwischen den Aufnahmeräumen übertragen werden, wodurch die Stabilität des Verbindungselements erhöht werden kann.

Gemäß einem weiteren Aspekt der vorliegenden Erfindung sind die Öffnungen aufgeweitet ausgebildet sind. Hierunter ist zu verstehen, dass die Öffnung nach außen hin, d.h. dem Aufnahmeraum abgewandt, eine zunehmende Größe aufweisen, so dass sich ein Festigkeitsträger, der in die Öffnung eingelegt ist, in der Höhe und in Querrichtung, d.h. senkrecht zur Längsrichtung als Zugrichtung, bewegen kann. Mit anderen Worten wird durch die Aufweitung der Öffnung ermöglicht, dass sich der Festigkeitsträger z.B. beim Auf- und Ablaufen auf einer Trommel immer in der neutralen Phase des Gurtes befinden kann. Hierdurch kann eine Auslenkung des Festigkeitsträgers und eine damit verbundene mögliche stärkere Umlenkung des Gurtes vermieden werden.

Gemäß einem weiteren Aspekt der vorliegenden Verbindung weist das Verbindungselement ein Verschlusselement zum Verschließen des Aufnahmeraums auf. Hierdurch können die Festigkeitsträgerenden im Aufnahmeraum gehalten werden. Auch können die Festigkeitsträgerenden auf diese Art und Weise vor Umwelteinflüssen wie z.B. Verunreinigung und Beschädigungen geschützt werden.

Gemäß einem weiteren Aspekt der vorliegenden Erfindung weist das Verschlusselement ein Verstärkungselement auf, um die Vorsprünge von der in Längsrichtung den Halteelementen gegenüberliegen Seite zumindest teilweise zu umfassen. Mit anderen Worten kann das Verstärkungselement die Vorsprünge entgegengesetzt der Zugrichtung des Festigkeitsträgers hintergreifen und auf diese Art und Weise abstützen, wodurch die Stabilität der Vorsprünge verbessert werden kann. Hierzu kann das Verstärkungselement als Kante des Verschlusselements ausgebildet sein.

Gemäß einem weiteren Aspekt der vorliegenden Erfindung ist das Verstärkungselement im Bereich der Öffnungen aufgeweitet ausgebildet. Diese Aufweitung des Verstärkungselements entspricht der Aufweitung der Öffnungen und weist die entsprechenden Eigenschaften und Vorteile auf, wie zuvor beschrieben.

Die vorliegende Erfindung betrifft auch einen endlos geschlossenen Gurt, der aus einem zuvor beschriebenen endlos schließbaren Fördergurt hergestellt werden kann, in dem dessen Elemente bestimmungsgemäß verwendet und montiert werden. Der endlos geschlossene Gurt weist die zuvor beschriebenen weiteren Merkmale und Vorteile auf, die daher nicht wiederholt werden sollen.

Die vorliegende Erfindung betrifft auch einen offenen Gurt an sich, welcher in Kombination mit einem erfindungsgemäßen Verbindungselement zu einem erfindungsgemäßen endlos schließbaren Gurt kombiniert werden kann. Der offene Gurt weist die zuvor beschriebenen weiteren Merkmale und Vorteile auf, die daher nicht wiederholt werden sollen.

Die vorliegende Erfindung betrifft auch ein Verbindungselement an sich, welches in Kombination mit einem erfindungsgemäßen offenen Gurt zu einem erfindungsgemäßen endlos schließbaren Gurt kombiniert werden kann. Das Verbindungselement weist die zuvor beschriebenen weiteren Merkmale und Vorteile auf, die daher nicht wiederholt werden sollen.

Zwei Ausführungsbeispiele und weitere Vorteile der Erfindung werden nachstehend im Zusammenhang mit den folgenden Figuren erläutert. Darin zeigt:
- Fig. 1: eine schematische Schnittdarstellung in Längsrichtung durch einen erfindungsgemäßen endlos geschlossenen Gurt eines ersten und zweiten Ausführungsbeispiels;
- Fig. 2a: eine schematische perspektivische Darstellung eines endlos geschlossenen Gurts des ersten Ausführungsbeispiels mit transparent dargestelltem Verschlusselement;
- Fig. 2b: eine Draufsicht auf den endlos geschlossenen Gurt der Fig. 2a;
- Fig. 3a: eine schematische perspektivische Darstellung eines endlos geschlossenen Gurts des zweiten Ausführungsbeispiels mit transparent dargestelltem Verschlusselement; und
- Fig. 3b: eine Draufsicht auf den endlos geschlossenen Gurt der Fig. 3a.

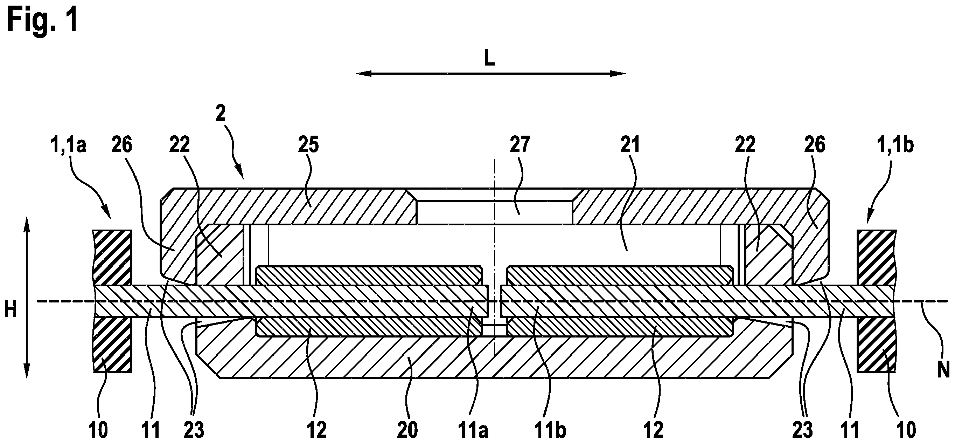

Fig. 1 zeigt eine schematische Schnittdarstellung in Längsrichtung L durch einen erfindungsgemäßen endlos geschlossenen Gurt 1 eines ersten und zweiten Ausführungsbeispiels. Die beiden Gurtenden 1a, 1b eines Gurtes 1 liegen sich in Längsrichtung L direkt gegenüber. Der Gurt 1 weist einen elastomeren Grundkörper 10 auf, in den mehrere Festigkeitsträger 11 in Form von Stahlseilen 11 eingebettet sind. Die Festigkeitsträgerenden 11a, 11b weisen jeweils ein Halteelement 12 in Form einer Presshülse 12 auf, die kraftschlüssig befestigt ist. Der Gurt 1 erstreckt sich im Wesentlichen in Längsrichtung L und ist in dieser Richtung geschlossen. Senkrecht hierzu erstrecken sich die Querrichtung Q und die Höhe H.

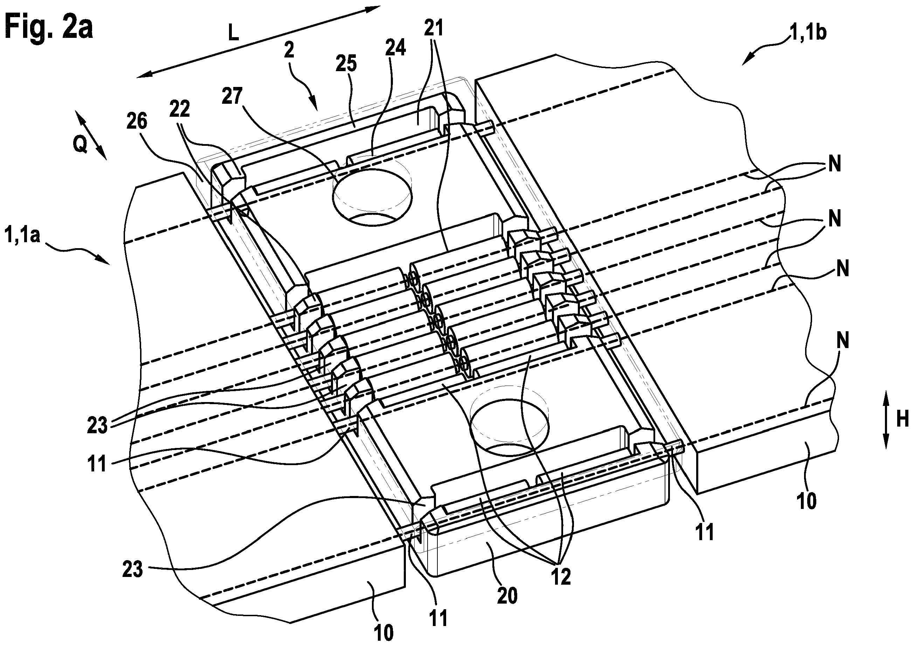

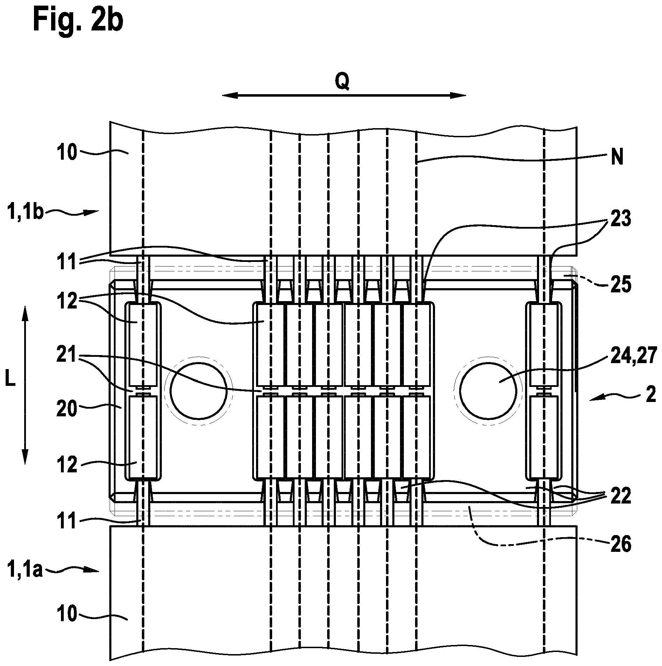

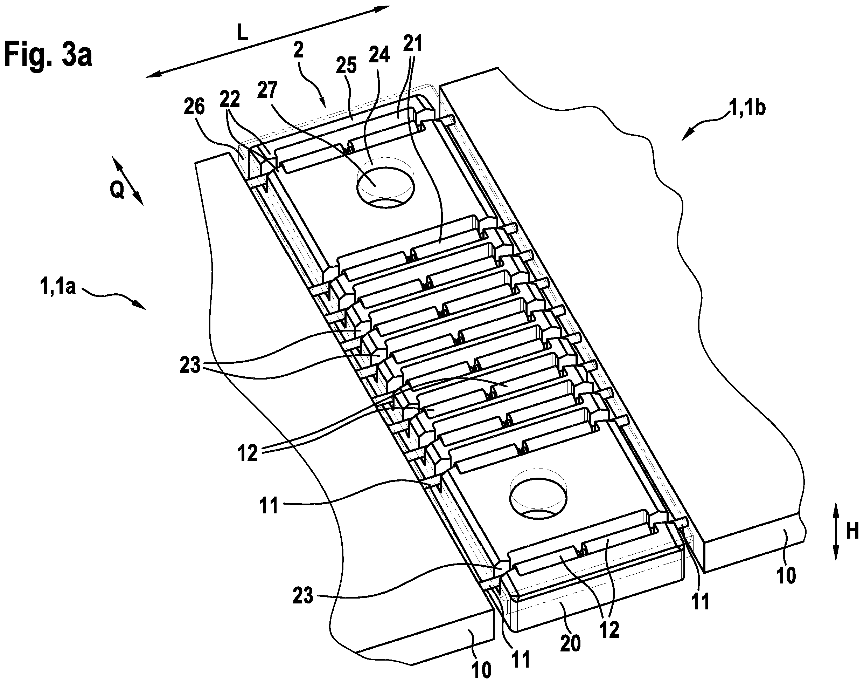

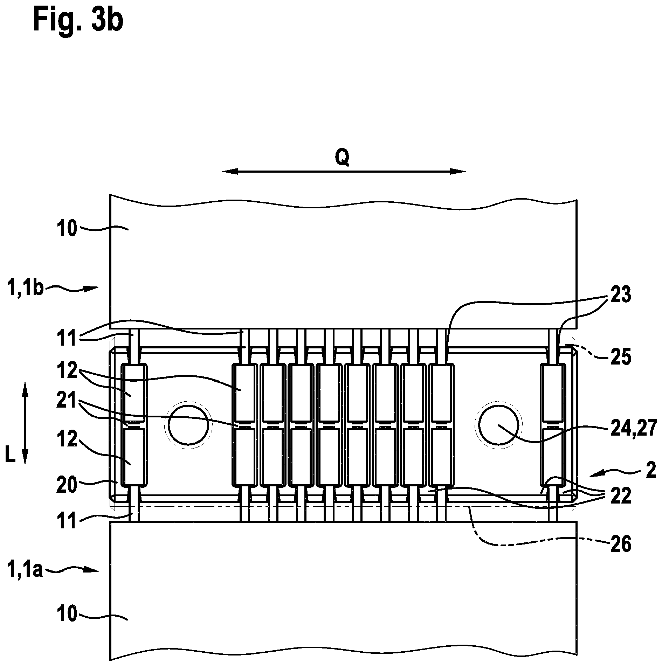

Der Gurt 1 weist ein Verbindungselement 2 auf, welches einen Aufnahmeelement 20 aufweist, in dessen Innerem gemäß des ersten Ausführungsbeispiels ein in Querrichtung Q sowie Längsrichtung L durchgängiger Aufnahmeraum 21 (vgl. Fig. 2a, 2b) und gemäß dem zweiten Ausführungsbeispiel mehrere in Querrichtung Q beabstandete und in Längsrichtung L jeweils durchgängige Aufnahmeräume 21 (vgl. Fig. 3a, 3b) ausgebildet sind. Der bzw. jeder Aufnahmeraum 21 wird in Längsrichtung L jeweils zum Gurtende 1a, 1b hin durch zinnenartige Vorsprünge 22 begrenzt, welche sich in der Höhe H erstrecken und in Querrichtung Q zueinander durch aufgeweitete Öffnungen 23 beabstandet sind.

Erfindungsgemäß werden die Festigkeitsträgerenden 11a, 11b mit ihren kraftschlüssig aufgepressten Halteelementen 12 von oben in den Aufnahmeraum 21 bzw. die Aufnahmeräume 21 eingelegt, so dass die Haltelemente 12 von innen gegen die Vorsprünge 22 anliegen und hierdurch eine formschlüssig Verbindung entsteht. Die beiden Festigkeitsträgerenden 11a, 11b desselben Festigkeitsträgers 11 liegen sich dabei direkt gegenüber, so dass sie durchgehend in der neutralen Phase N verlaufen.

Das Verbindungselement 2 weist ferner ein Verschlusselement 25 in Form eines Deckels 25 auf, welches mittels einer Verschraubung durch entsprechende Bohrungen 24, 27 des Aufnahmeelements 20 bzw. Verschlusselements 25 befestigt werden kann (vgl. z.B. Fig. 2a). Das Verschlusselement 25 weist an seinen beiden den Gurtenden 1a, 1b zugewandten Seiten jeweils ein in der Höhe H ausgebildetes Verstärkungselement 26 in Form einer Haltekante 26 auf, welches von außen hinter die Vorsprünge 22 greift. Hierdurch werden gerade die oberen Enden der Vorsprünge 22, welche den Zugkräften des Gurtes in Längsrichtung L am wenigsten widerstehen können, durch die Haltekante 26 stabilisiert. Die Haltekante 26 ist im Bereich der Öffnungen 23 zu den Gurtenden 1a, 1b hin sich angeschrägt ausgebildet, so dass sich auch hier eine Aufweitung ergibt.

Fig. 2a zeigt eine schematische perspektivische Darstellung eines endlos geschlossenen Gurts 1 des ersten Ausführungsbeispiels mit transparent dargestelltem Verschlusselement 25. Fig. 2b zeigt eine Draufsicht auf den endlos geschlossenen Gurt 1 der Fig. 2a. In diesem ersten Ausführungsbeispiel ist der Aufnahmeraum 21 sowohl in Querrichtung Q als auch in Längsrichtung L durchgängig ausgebildet.

Fig. 3a zeigt eine schematische perspektivische Darstellung eines endlos geschlossenen Gurts 1 des zweiten Ausführungsbeispiels mit transparent dargestelltem Verschlusselement 25. Fig. 3b zeigt eine Draufsicht auf den endlos geschlossenen Gurt 1 der Fig. 3a. In diesem zweiten Ausführungsbeispiel sind die Aufnahmeräume 21 in Querrichtung Q zueinander beabstandet und jeweils in Längsrichtung L durchgängig ausgebildet.

### Bezugszeichenliste

### (Teil der Beschreibung)

- L: Längsrichtung des Gurtes 1
- H: Höhe bzw. Dicke des Gurtes 1
- N: Neutrale Phase des Gurtes 1
- Q: Querrichtung des Gurtes 1

- 1: endlos geschlossener Gurt
- 1a: erstes Gurtende
- 1b: zweites Gurtende
- 10: elastomerer Grundkörper
- 11: Festigkeitsträger, Stahlseile
- 11a: erstes Festigkeitsträgerende
- 11b: zweites Festigkeitsträgerende
- 12: Halteelemente, Presshülsen

- 2: Verbindungselement
- 20: Aufnahmeelement
- 21: Aufnahmeraum
- 22: zinnenartige Vorsprünge, Stege
- 23: aufgeweitete Öffnungen des Aufnahmeelements 20 bzw. Verschlusselements 25
- 24: Bohrung des Aufnahmeelements 20
- 25: Verschlusselement, Deckel
- 26: Verstärkungselement bzw. Haltekante des Verschlusselements 24
- 27: Bohrung des Verschlusselements 25

## Patentansprüche

1. Endlos schließbarer Gurt (1), mit
wenigstens einem in Längsrichtung (L) des Gurtes (1) verlaufendem Festigkeitsträger (11),
einem einstückigen Verbindungselement (2), welches die beiden Festigkeitsträgerenden (11a, 11b) miteinander verbinden kann,
wobei die beiden Festigkeitsträgerenden (11a, 11b) jeweils wenigstens ein kraftschlüssig befestigtes Halteelement (12) aufweisen, wobei die beiden Festigkeitsträgerenden (11a, 11b) durch das Verbindungselement (2) in Längsrichtung (L) formschlüssig gehalten werden können, **dadurch gekennzeichnet, dass** das Verbindungselement (2) wenigstens einen Aufnahmeraum (21) aufweist, in welchem die die Halteelemente (12) aufweisenden Festigkeitsträgerenden (11a, 11b) gemeinsam oder einzeln in Längsrichtung (L) formschlüssig gehalten werden können.

2. Endlos schließbarer Gurt (1) nach Anspruch 1,
wobei die beiden Festigkeitsträgerenden (11a, 11b) sich in Längsrichtung (L) direkt gegenüberliegend angeordnet werden können.

3. Endlos schließbarer Gurt (1) nach Anspruch 1 oder 2,
wobei das Verbindungselement (2) durch Vorsprünge (22) in Querrichtung (Q) begrenzte Öffnungen (23) aufweist, so dass
der Festigkeitsträger (11) in Längsrichtung (L) durch die Öffnungen (23) hindurch angeordnet werden kann und so dass
die Halteelemente (12) der Festigkeitsträgerenden (11a, 11b) von den Vorsprüngen (22) in Längsrichtung (L) formschlüssig gehalten werden können.

4. Endlos schließbarer Gurt (1) nach Anspruch 3,
wobei die sich in Längsrichtung (L) gegenüberliegenden Vorsprünge (22) miteinander verbunden ausgebildet sind.

5. Endlos schließbarer Gurt (1) nach Anspruch 3 oder 4,
wobei die Öffnungen (23) aufgeweitet ausgebildet sind.

6. Endlos schließbarer Gurt (1) nach einem der vorangehenden Ansprüche,
wobei das Verbindungselement (2) ein Verschlusselement (25) zum Verschließen des Aufnahmeraums (21) aufweist.

7. Endlos schließbarer Gurt (1) nach Anspruch 6,
wobei das Verschlusselement (25) ein Verstärkungselement (26) aufweist, um die Vorsprünge (22) von der in Längsrichtung (L) den Halteelementen (12) gegenüberliegen Seite zumindest teilweise zu umfassen.

8. Endlos schließbarer Gurt (1) nach Anspruch 7,
wobei das Verstärkungselement (26) im Bereich der Öffnungen (23) aufgeweitet ausgebildet ist.

9. Endlos geschlossener Gurt (1) nach einem der vorherigen Ansprüche, mit wenigstens einem in Längsrichtung (L) des Gurtes (1) verlaufendem Festigkeitsträger (11),
einem einstückigen Verbindungselement (2), welches die beiden Festigkeitsträgerende (11a, 11b) miteinander verbindet,
wobei die beiden Festigkeitsträgerenden (11a, 11b) jeweils wenigstens ein kraftschlüssig befestigtes Halteelement (12) aufweisen,
**dadurch gekennzeichnet, dass**
die beiden Festigkeitsträgerenden (11a, 11b) durch das Verbindungselement (2) in Längsrichtung (L) formschlüssig gehalten werden.

10. Verbindungselement (2) zur Verwendung bei einem endlos schließbaren Gurt (1) gemäß einem der Ansprüche 1 bis 9,
wobei das Verbindungselement (2) einstückig ausgebildet ist, um die beiden Festigkeitsträgerende (11a, 11b) miteinander verbinden zu können, wobei das Verbindungselement (2) ausgebildet ist, die jeweils ein kraftschlüssig befestigtes Halteelement (12) aufweisenden Festigkeitsträgerenden (11a, 11b) in Längsrichtung (L) formschlüssig halten zu können, **dadurch gekennzeichnet, dass** das Verbindungselement (2) wenigstens einen Aufnahmeraum (21) aufweist, welcher ausgebildet ist, die die Halteelemente (12) aufweisenden Festigkeitsträgerenden (11a, 11b) gemeinsam oder einzeln in Längsrichtung (L) formschlüssig zu halten.

## Claims

1. Endlessly closable belt (1), with
at least one strength member (11) running in the longitudinal direction (L) of the belt (1),
an integral connecting element (2) which can connect the two strength member ends (11a, 11b) to each other,
wherein the two strength member ends (11a, 11b) each have at least one holding element (12) fastened in a force-fitting manner,
wherein the two strength member ends (11a, 11b) can be held in a form-fitting manner in the longitudinal direction (L) by the connecting element (2), **characterized in that** the connecting element (2) has at least one receiving space (21) in which the strength member ends (11a, 11b) having the holding elements (12) can be held jointly or individually in a form-fitting manner in the longitudinal direction (L).

2. Endlessly closable belt (1) according to Claim 1,
wherein the two strength member ends (11a, 11b) can be arranged directly opposite each other in the longitudinal direction (L).

3. Endlessly closable belt (1) according to Claim 1 or 2, wherein the connecting element (2) has openings (23) bounded by projections (22) in the transverse direction (Q), and therefore the strength member (11) can be arranged through the openings (23) in the longitudinal direction (L) and therefore the holding elements (12) of the strength member ends (11a, 11b) can be held in a form-fitting manner in the longitudinal direction (L) by the projections (22).

4. Endlessly closable belt (1) according to Claim 3,
wherein the opposite projections (22) in the longitudinal direction (L) are configured in a manner connected to each other.

5. Endlessly closable belt (1) according to Claim 3 or 4, wherein the openings (23) are configured in a widened manner.

6. Endlessly closable belt (1) according to one of the preceding claims, wherein the connecting element (2) has a closure element (25) for closing the receiving space (21).

7. Endlessly closable belt (1) according to Claim 6,
wherein the closure element (25) has a reinforcing element (26) in order to at least partially surround the projections (22) from the side opposite the holding elements (12) in the longitudinal direction (L) .

8. Endlessly closable belt (1) according to Claim 7,
wherein the reinforcing element (26) is configured in a widened manner in the region of the openings (23) .

9. Endlessly closed belt (1) according to one of the preceding claims, with
at least one strength member (11) running in the longitudinal direction (L) of the belt (1),
an integral connecting element (2) which can connect the two strength member ends (11a, 11b) to each other,
wherein the two strength member ends (11a, 11b) each have at least one holding element (12) fastened in a force-fitting manner,
**characterized in that**
the two strength member ends (11a, 11b) are held in a form-fitting manner in the longitudinal direction (L) by the connecting element (2).

10. Connecting element (2) for use in an endlessly closable belt (1) according to one of Claims 1 to 9, wherein the connecting element (2) is configured integrally in order to be able to connect the two strength member ends (11a, 11b) to each other,
wherein the connecting element (2) is configured to be able to hold the strength member ends (11a, 11b) in a form-fitting manner in the longitudinal direction (L), the strength member ends each having a holding element (12) fastened in a force-fitting manner, **characterized in that** the connecting element (2) has at least one receiving space (21) which is configured to hold the strength member ends (11a, 11b), which have the holding elements (12), jointly or individually in a form-fitting manner in the longitudinal direction (L).

## Revendications

1. Courroie sans fin fermable en boucle (1) avec
au moins un élément de résistance (11) s'étendant dans la direction longitudinale (L) de la courroie (1),
un élément de liaison d'une pièce (2), qui peut relier l'une à l'autre les deux extrémités de l'élément de résistance (11a, 11b),
dans laquelle les deux extrémités de l'élément de résistance (11a, 11b) présentent chacune au moins un élément de maintien fixé par force (12),
dans laquelle les deux extrémités de l'élément de résistance (11a, 11b) peuvent être maintenues par emboîtement dans la direction longitudinale (L) par l'élément de liaison (2),
**caractérisée en ce que** l'élément de liaison (2) présente au moins un espace de logement (21), dans lequel les extrémités de l'élément de résistance (11a, 11b) présentant les éléments de maintien (12) peuvent être maintenues ensemble ou individuellement par emboîtement dans la direction longitudinale (L).

2. Courroie sans fin fermable en boucle (1) selon la revendication 1, dans laquelle les deux extrémités de l'élément de résistance (11a, 11b) peuvent être disposées directement l'une en face de l'autre dans la direction longitudinale (L).

3. Courroie sans fin fermable en boucle (1) selon une revendication 1 ou 2, dans laquelle l'élément de liaison (2) présente des ouvertures (23) limitées en direction transversale (Q) par des saillies (22), de telle manière que l'élément de résistance (11) puisse être disposé à travers les ouvertures (23) en direction longitudinale (L) et de telle manière que les éléments de maintien (12) des extrémités de l'élément de résistance (11a, 11b) puissent être maintenus par emboîtement par les saillies (22) dans la direction longitudinale (L).

4. Courroie sans fin fermable en boucle (1) selon la revendication 1, dans laquelle les saillies (22) opposées l'une à l'autre en direction longitudinale (L) sont reliées l'une à l'autre.

5. Courroie sans fin fermable en boucle (1) selon une revendication 3 ou 4, dans laquelle les ouvertures (23) sont de forme élargie.

6. Courroie sans fin fermable en boucle (1) selon l'une quelconque des revendications précédentes, dans laquelle l'élément de liaison (2) présente un élément de fermeture (25) pour fermer l'espace de logement (21).

7. Courroie sans fin fermable en boucle (1) selon la revendication 6, dans laquelle l'élément de fermeture (25) présente un élément de renforcement (26), afin d'encadrer au moins en partie les saillies (22) par le côté opposé dans la direction longitudinale (L) aux éléments de maintien (12).

8. Courroie sans fin fermable en boucle (1) selon la revendication 7, dans laquelle l'élément de renforcement (26) est de forme élargie dans la région des ouvertures (23) .

9. Courroie sans fin fermée en boucle (1) selon l'une quelconque des revendications précédentes, avec au moins un élément de résistance (11) s'étendant dans la direction longitudinale (L) de la courroie (1),
un élément de liaison d'une pièce (2), qui relie l'une à l'autre les deux extrémités de l'élément de résistance (11a, 11b),
dans laquelle les deux extrémités de l'élément de résistance (11a, 11b) présentent chacune au moins un élément de maintien (12) fixé par force,
**caractérisée en ce que** les deux extrémités de l'élément de résistance (11a, 11b) sont maintenues par emboîtement dans la direction longitudinale (L) par l'élément de liaison (2).

10. Elément de liaison (2) à utiliser dans une courroie sans fin fermable en boucle (1) selon l'une quelconque des revendications 1 à 9,
dans lequel l'élément de liaison (2) est formé d'une pièce, afin de pouvoir relier l'une à l'autre les deux extrémités de l'élément de résistance (11a, 11b),
dans lequel l'élément de liaison (2) est configuré pour pouvoir maintenir par emboîtement dans la direction longitudinale (L) les extrémités de l'élément de résistance (11a, 11b) présentant chacune un élément de maintien (12) fixé par force,
**caractérisé en ce que** l'élément de liaison (2) présente au moins un espace de logement (21), qui est configuré pour maintenir par emboîtement en direction longitudinale (L), ensemble ou individuellement, les extrémités de l'élément de résistance (11a, 11b) présentant les éléments de maintien (12).
